# EUROPÄISCHE PATENTSCHRIFT

(11) **EP 3 369 645 B1**
(45) Veröffentlichungstag und Bekanntmachung des Hinweises auf die Patenterteilung: **31.07.2019**
(21) Anmeldenummer: 17159090.4
(22) Anmeldetag: 03.03.2017
(51) Int. Cl.: B62D 21/11

(54) **HILFSRAHMEN FÜR EIN KRAFTFAHRZEUG MIT OPTIMIERTER ANBINDUNG EINES QUERTRÄGERS AN EINEM LÄNGSTRÄGER**
SUBFRAME FOR A MOTOR VEHICLE WITH OPTIMIZED CONNECTING OF A CROSS-MEMBER TO A LONGITUDINAL BEAM
FAUX-CHÂSSIS POUR UN VÉHICULE AUTOMOBILE COMPRENANT UNE LIAISON OPTIMISÉE D'UNE TRAVERSE SUR UN LONGERON

(43) Veröffentlichungstag der Anmeldung: 05.09.2018
(73) Patentinhaber: Autotech Engineering Deutschland GmbH, 33647 Bielefeld (DE)
(72) Erfinder: Aso, Raymond, Darlington, DL1 3QA (GB); Tahir, Zidane, Gateshead, NE8 2AA (GB)
(74) Vertreter: Cohausz & Florack

(56) Entgegenhaltungen:
- DE-A1-102012 021 562
- DE-A1-102012 023 633

## Beschreibung

Die Erfindung betrifft einen Hilfsrahmen für ein Kraftfahrzeug, mit beabstandet voneinander verlaufenden Längsträgern, mindestens einem die Längsträger miteinander verbindenden Querträger und Verstärkungselementen, die mit den Längsträgern und dem Querträger verbunden und aus Metallblech gefertigt sind.

Unter dem Begriff "Längsträger" werden hier Tragelemente oder Abschnitte eines oder mehrerer Tragelemente des Hilfsrahmens verstanden, die sich im montierten Zustand des Hilfsrahmens im Wesentlichen entlang der Längsachse des betreffenden Kraftfahrzeuges erstrecken.

Derartige Hilfsrahmen, auch als Achsträger bezeichnet, sind in vielfältigen Ausführungen bekannt (siehe z.B. DE 10 2012 021 562 A1, DE 10 2012 111 461 A1 und DE 10 2012 023 633A1). Sie sollen bei hoher Festigkeit und Steifigkeit möglichst leicht sein und weisen üblicherweise Lenkeranbindungen (Lageraufnahmen) für Radführungselemente und andere Aggregate auf, um als Vormontageeinheit den Einbau kompletter Vorder- oder Hinterachsmodule mit Antriebseinheiten zu ermöglichen.

Kraftfahrzeug-Hilfsrahmen und andere Fahrwerksteile sind im Betrieb des Kraftfahrzeugs dynamischen Belastungen in Form von Schwingungen ausgesetzt. Werden die maximalen Spannungen nicht zu groß, so ist das betreffende Fahrwerksteil, insbesondere ein Hilfsrahmen, in der Lage, diese Schwingungen beliebig oft zu ertragen. Dieser Grenzwert wird als Dauerfestigkeit oder Dauerschwingfestigkeit bezeichnet. Die Dauerfestigkeit wird neben der Schwingbeanspruchung insbesondere auch durch die Geometrie des betreffenden Fahrwerksteils bzw. Hilfsrahmen beeinflusst.

Der vorliegenden Erfindung liegt die Aufgabe zugrunde, einen Hilfsrahmen der eingangs genannten Art zu schaffen, der bei relativ geringem Gewicht eine hohe Dauerschwingfestigkeit bietet.

Gelöst wird die Aufgabe durch einen Hilfsrahmen mit den im Anspruch 1 angegebenen Merkmalen. Bevorzugte und vorteilhafte Ausgestaltungen des erfindungsgemäßen Hilfsrahmens sind in den Unteransprüchen angegeben.

Der erfindungsgemäße Hilfsrahmen weist aus Metallblech gefertigte Verstärkungselemente auf, die mit den Längsträgern und dem mindestens einen Querträger verbunden sind, wobei die Verstärkungselemente aus einem ersten Verstärkungselement und einem zweiten Verstärkungselement zusammengesetzt sind, die als gebogene Schalen ausgeführt sind und einander überlappende Enden aufweisen, wobei die überlappenden Enden mit dem Querträger oder einem der Längsträger stoffschlüssig verbunden, vorzugsweise verschweißt sind.

Durch die erfindungsgemäße Gestaltung der Verstärkungselemente in Form von gebogenen Schalen mit einander überlappenden Enden, die mit dem Querträger oder einem der Längsträger stoffschlüssig verbunden, vorzugsweise verschweißt sind, lässt sich die mechanische Spannung (Belastung) im Verbindungbereich von Querträger und Längsträger erheblich reduzieren und dadurch die Dauerschwingfestigkeit des Hilfsrahmens entsprechend erhöhen. Das Gewicht der Verstärkungselemente lässt sich zumindest teilweise durch eine gewichtsreduzierte Konstruktion des Querträgers und/oder des jeweiligen Längsträgers kompensieren.

Die Verstärkungselemente, d.h. das erste Verstärkungselement und das zweite Verstärkungselement, können vorzugsweise nur zwei erfindungsgemäß ausgeführte Verstärkungselemente umfassen und dann auch als Verstärkungsblechschalenpaar bezeichnet werden.

Nach einer bevorzugten Ausgestaltung der Erfindung weist der erfindungsgemäße Hilfsrahmen ein gabelförmiges oder im Wesentlichen U-förmiges Tragelement auf, dessen Enden an dem Querträger angeschlossen sind. Das Tragelement weist dabei zwei Abschnitte auf, die sich im montierten Zustand des Hilfsrahmens im Wesentlichen in Fahrzeuglängsrichtung erstrecken und daher auch als Längsträger bezeichnet werden können. Die sich im Wesentlichen in Fahrzeuglängsrichtung erstreckenden Abschnitte des Tragelements bzw. Längsträger sind durch einen mittleren Abschnitt des Tragelements miteinander verbunden. Der mittlere Abschnitt erstreckt sich im montierten Zustand des Hilfsrahmens im Wesentlichen in Fahrzeugquerrichtung und kann daher ebenfalls als Querträger bezeichnet werden. Diese Ausgestaltung bietet bei geringem Bauteilgewicht sowie hohen Steifigkeits- und Dauerschwingfestigkeitseigenschaften einen relativ großen bzw. gut zugänglichen Bauraum für die Unterbringung mindestens eines Antriebsaggregats. Die Längsträger gehen bei dieser Ausgestaltung vorzugsweise über bogenförmige Abschnitte in den mittleren Abschnitt des Tragelements über. Der mittlere Abschnitt des Tragelements verläuft unterhalb des Querträgers, beabstandet von letzterem sowie vorzugsweise im Wesentlichen in vertikaler Flucht zu demselben. Das gabelförmige oder im Wesentlichen U-förmige Tragelement ist vorzugsweise einstückig ausgebildet. Die mit dem Querträger verbundenen Längsträger weisen vorzugsweise bogenförmige Endabschnitte auf.

Eine weitere bevorzugte Ausgestaltung des erfindungsgemäßen Hilfsrahmens ist dadurch gekennzeichnet, dass die überlappenden Enden beabstandet voneinander mit dem Querträger oder einem der Längsträger stoffschlüssig verbunden sind. Hierdurch lässt sich die mechanische Spannung (Belastung) im Verbindungbereich von Querträger und Längsträger weiter reduzieren und dadurch die Dauerschwingfestigkeit des Hilfsrahmens weiter verbessern.

Nach einer weiteren Ausgestaltung der Erfindung sind die überlappenden Enden der Verstärkungselemente unterschiedlich gebogen, derart dass das überlappende Ende des ersten Verstärkungselements einen größeren Biegeradius aufweist als das überlappende Ende des zweiten Verstärkungselements. Hierdurch lässt sich in zuverlässiger und fertigungstechnisch günstiger Weise sowohl ein deutlicher Abstand zwischen den überlappenden Enden der Verstärkungselemente als auch eine an die Geometrie des Längsträgers oder Querträgers optimal angepasste Verbindungslinie (Verbindungskurve) an der stoffschlüssigen Verbindung der überlappenden Enden mit dem Querträger bzw. einem der Längsträger erzielen.

Eine weitere bevorzugte Ausgestaltung der Erfindung sieht dementsprechend vor, dass das zweite Verstärkungselement an seinem das erste Verstärkungselement überlappenden Ende einen Flansch aufweist, der in Richtung des ersten Verstärkungselements gebogen ist, mit einem Biegeradius, der kleiner ist als der Biegeradius eines gebogenen Abschnitts des überlappenden Endes des ersten Verstärkungselements. Der Flansch endet dabei vorzugsweise in einem von dem ersten Verstärkungselement und dem zweiten Verstärkungselement begrenzten Raum. Hinsichtlich der angestrebten Verringerung der mechanischen Spannung im Verbindungbereich von Querträger und Längsträger ist es insbesondere vorteilhaft, wenn nach einer weiteren bevorzugten Ausgestaltung der Erfindung der größere Biegeradius mindestens das 1,5-fache, vorzugsweise mindestens das 2-fache, besonders bevorzugt mindestens das 2,5-fache des kleineren Biegeradius des Flansches beträgt.

Eine weitere vorteilhafte Ausgestaltung der Erfindung ist dadurch gekennzeichnet, dass mindestens eines oder beide der überlappenden Enden der Verstärkungselemente mit mindestens einer Sicke und/oder mindestens einer Ausnehmung (Durchgangsloch) versehen ist. Durch die Sicke, die sich vorzugsweise im Wesentlichen in Richtung der Längsmittelachse des betreffenden Verstärkungselements erstreckt, wird die Steifigkeit und Dauerfestigkeit des Verstärkungselements verbessert. Die Blechdicke des Verstärkungselements kann dementsprechend verringert werden, was zugleich eine Gewichtsreduzierung bedeutet. Die mindestens eine Ausnehmung (Durchgangsloch) in dem überlappenden Ende des Verstärkungselements bewirkt eine Spannungsentlastung, die sowohl hinsichtlich der stoffschlüssigen Anbindung, vorzugsweise Schweißanbindung des Verstärkungselements als auch hinsichtlich der Dauerschwingfestigkeit des Hilfsrahmens von Vorteil ist.

Nach einer weiteren Ausgestaltung des erfindungsgemäßen Hilfsrahmens definiert das zweite Verstärkungselement eine Mittelebene, wobei das überlappende Ende des ersten Verstärkungselements eine Kante aufweist, die sich zumindest abschnittsweise über die Mittelebene des zweiten Verstärkungselements hinaus erstreckt. Auch diese Ausgestaltung wirkt sich vorteilhaft auf die Optimierung der Dauerschwingfestigkeit des Hilfsrahmens aus. Die besagte Mittelebene kann auch als im Wesentlichen flacher oder plattenförmiger Abschnitt des zweiten Verstärkungselements bezeichnet werden.

Das erste Verstärkungselement ist dabei vorzugsweise im Wesentlichen auf einer Außenseite des Hilfsrahmens angeordnet, während das zweite Verstärkungselement im Wesentlichen auf einer Innenseite des Hilfsrahmens angeordnet ist. Diese Anordnung hat sich in Versuchen als besonders vorteilhaft für die Optimierung der Dauerschwingfestigkeit des Hilfsrahmens herausgestellt.

Eine weitere bevorzugte Ausgestaltung der Erfindung sieht vor, dass das überlappende Ende des ersten Verstärkungselements das überlappende Ende des zweiten Verstärkungselements an der Unterseite des zweiten Verstärkungselements (im bestimmungsgemäßen Einbauzustand) überlappt. Diese Ausgestaltung ist insbesondere dann günstig, wenn das erste Verstärkungselement im Wesentlichen auf einer Außenseite des Hilfsrahmens angeordnet ist und/oder der Abschnitt des Querträgers oder Längsträgers, mit welchem die überlappenden Enden der Verstärkungselemente stoffschlüssig verbunden, vorzugsweise verschweißt werden, bogenförmig ausgebildet ist.

Eine weitere vorteilhafte Ausgestaltung der Erfindung ist dadurch gekennzeichnet, dass die überlappenden Enden entlang unterschiedlich langer Verbindungslinien, vorzugsweise unterschiedlich langer Schweißlinien, mit dem Querträger oder einem der Längsträger stoffschlüssig verbunden sind. Hierdurch lässt sich die Dauerschwingfestigkeit des Hilfsrahmens weiter optimieren. Beispielsweise beträgt die längere der Verbindungslinien mindestens das 1,3-fache, vorzugsweise mindestens das 1,5-fache, besonders bevorzugt mindestens das 1,8-fache der kürzeren Verbindungslinie. Die Verbindungslinien bzw. Schweißlinien verlaufen dabei kurvenförmig.

Das erste Verstärkungselement und das zweite Verstärkungselement können sich entlang des Querträgers oder eines der Längsträger erstrecken. Vorzugsweise erstrecken sich die Verstärkungselemente entlang des mindestens einen Querträgers, der oft größeren dynamischen Belastungen (Schwingungen) ausgesetzt ist als der jeweilige Längsträger des Hilfsrahmens.

Nach einer weiteren Ausgestaltung der Erfindung sind das erste Verstärkungselement und das zweite Verstärkungselement entlang eines zwischen ihren Enden liegenden mittleren Abschnitts miteinander stoffschlüssig verbunden. Dadurch wird insbesondere die Steifigkeit des Hilfsrahmens erhöht. Vorzugsweise ist dabei die stoffschlüssige Verbindung entlang des mittleren Abschnitts zumindest teilweise als Lochschweißung, vorzugsweise Langlochschweißung, ausgebildet. Diese Art der Verbindung der Verstärkungselemente untereinander trägt zu einer hohen Dauerschwingfestigkeit des Hilfsrahmens bei.

Vorzugsweise ist das erste Verstärkungselement im Wesentlichen auf einer Außenseite des Hilfsrahmens angeordnet, während das zweite Verstärkungselement im Wesentlichen auf einer Innenseite des Hilfsrahmens angeordnet ist.

Eine weitere vorteilhafte Ausgestaltung des erfindungsgemäßen Hilfsrahmens ist dadurch gekennzeichnet, dass die Längsträger und/oder der Querträger und/oder die Verstärkungselemente zumindest teilweise aus Leichtmetall, vorzugsweise Aluminium oder einer auf Aluminium basierenden Metalllegierung gefertigt sind. Diese Ausgestaltung ermöglicht eine erhebliche Gewichtsreduzierung des Hilfsrahmens. Alternativ kann der erfindungsgemäße Hilfsrahmen aber auch teilweise oder vollständig aus Stahlblech bzw. Stahlbauteilen zusammengesetzt sein.

Nachfolgend wird die Erfindung anhand einer ein Ausführungsbeispiel darstellenden Zeichnung näher erläutert. Es zeigen:
- Fig. 1: einen Hilfsrahmen für ein Kraftfahrzeug in einer perspektivischen Ansicht von oben;
- Fig. 2: einen Abschnitts des Hilfsrahmens aus Fig. 1 in einer Querschnittansicht entlang der Schnittlinie II-II in Fig. 1;
- Fig. 3: den Hilfsrahmen aus Fig. 1 in einer perspektivischen Ansicht von unten;
- Fig. 4: eine vergrößerte Darstellung des Details IV aus Fig. 3;
- Fig. 5: ein erstes Verstärkungselement des Hilfsrahmens aus Fig. 1 in einer perspektivischen Darstellung; und
- Fig.6: ein zweites Verstärkungselement des Hilfsrahmens aus Fig. 1 in einer perspektivischen Darstellung.

Der in der Zeichnung dargestellte Hilfsrahmen 1 dient der Lagerung mindestens eines Antriebsaggregats sowie der gelenkigen Lagerung von Radführungselementen eines Kraftfahrzeuges, insbesondere eines Personenkraftfahrzeuges. Der dargestellte Hilfsrahmen 1 ist hier beispielhaft als Hinterachshilfsrahmen ausgeführt. Allerdings lassen sich die nachfolgend beschriebenen Konstruktionsmerkmale auch auf einen Vorderachshilfsrahmen übertragen.

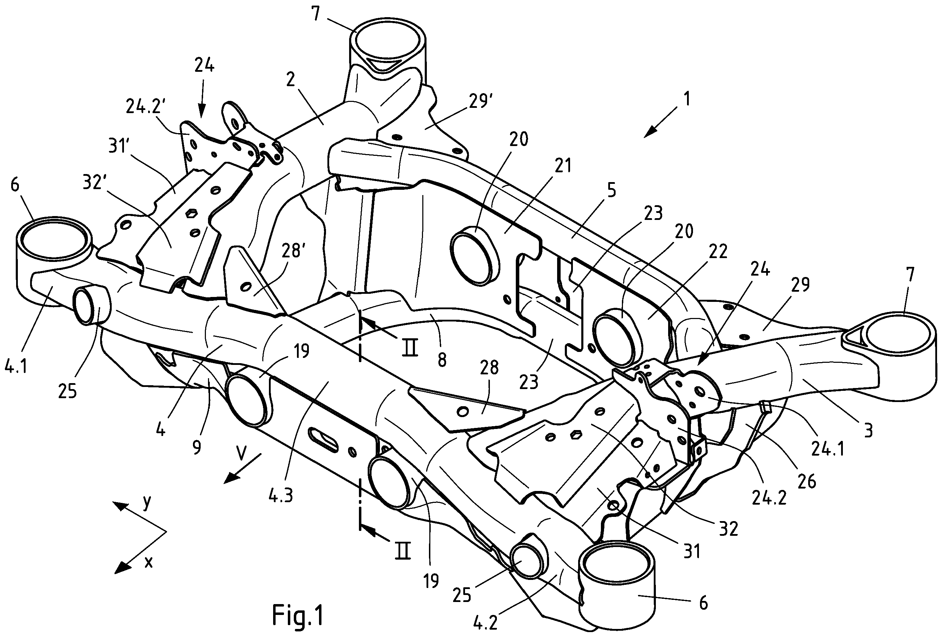

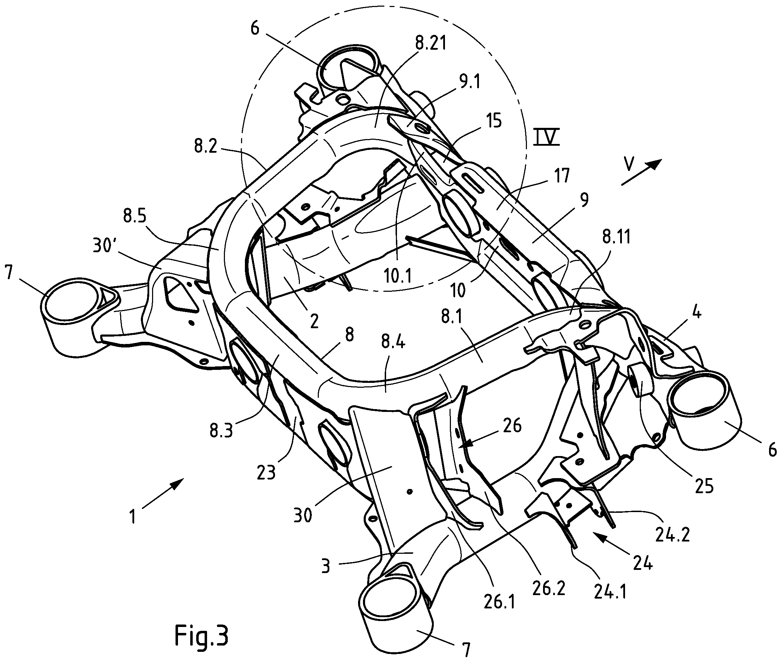

Der Hilfsrahmen 1 ist aus zwei sich im Wesentlichen in Fahrzeuglängsrichtung x erstreckenden Längsträgern 2, 3 sowie einem ersten Querträger 4 und einem zweiten Querträger 5 zusammengesetzt. Die beiden sich im Wesentlichen in Fahrzeugquerrichtung y erstreckenden Querträger 4, 5 verbinden die beiden voneinander beabstandeten Längsträger 2, 3. Bei dem dargestellten Ausführungsbeispiel eines Hinterachshilfsrahmens liegt der erste Querträger 4 bezogen auf die Vorwärtsfahrtrichtung V vor dem zweiten Querträger 5. Eine Umkehrung der Anordnung der in den Figuren 1 und 3 gezeigten Querträger 4, 5 ist jedoch möglich. Die Längsträger 2, 3 sowie die Querträger 4, 5 sind vorzugsweise rohrförmig ausgeführt.

Die Längsträger 2, 3 sind jeweils mit einem in Vorwärtsfahrtrichtung weisenden Stirnende an den ersten bzw. vorderen Querträger 4 angeschlossen. Der vordere Querträger 4 ragt seitlich über die Stirnenden der Längsträger 2, 3 hinaus und weist an seinen dort befindlichen Endabschnitten 4.1, 4.2 jeweils einen Anbindungspunkt 6 zur Befestigung des Hilfsrahmens 1 an der Fahrzeugkarosserie. Die Anbindungspunkte 6 sind in dem gezeigten Ausführungsbeispiel als an den Querträgerenden befestigte Buchsen ausgebildet. Jedoch ist auch eine andersartige Ausgestaltung dieser Anbindungspunkte 6 möglich. Die Endabschnitte 4.1, 4.2 des vorderen Querträgers 4 sind relativ zu einem zwischen den Längsträgern liegenden Mittelabschnitt 4.3 des Querträgers schräg nach unten gebogen oder gekröpft.

Die Längsträger 2, 3 ragen mit ihrem hinteren Ende über den hinteren bzw. zweiten Querträger 5 hinaus. Der Querträger 5 ist mit seinen Enden an Innenseiten der Längsträger 2, 3 angeschlossen. An den hinteren Enden der Längsträger 2, 3 sind weitere Anbindungspunkte 7 zur Befestigung des Hilfsrahmens 1 an der Fahrzeugkarosserie angebracht. Die Anbindungspunkte 7 sind wiederum beispielhaft als Buchsen dargestellt, wobei jedoch auch hier eine andersartige Ausgestaltung der Anbindung möglich ist.

Der Hilfsrahmen 1 weist ferner ein gabelförmiges oder im Wesentlichen U-förmiges Tragelement 8 auf, dessen Enden an dem vorderen Querträger 4 angeschlossen sind. Das Tragelement 8 weist zwei Abschnitte 8.1, 8.2 auf, die sich im montierten Zustand des Hilfsrahmens 1 im Wesentlichen in Fahrzeuglängsrichtung x erstrecken und daher auch als Längsträger bezeichnet werden können. Die sich im Wesentlichen in Fahrzeuglängsrichtung x erstreckenden Abschnitte des Tragelements 8 bzw. Längsträger 8.1, 8.2 sind durch einen mittleren Abschnitt 8.3 des Tragelements 8 miteinander verbunden. Der mittlere Abschnitt 8.3 erstreckt sich im montierten Zustand des Hilfsrahmens 1 im Wesentlichen in Fahrzeugquerrichtung y und kann daher auch als Querträger bezeichnet werden. Die Abschnitte bzw. Längsträger 8.1, 8.2 des Tragelements 8 gehen über bogenförmige Abschnitte 8.4, 8.5 in den Querträger bzw. mittleren Abschnitt 8.3 des Tragelements über. Der mittlere Abschnitt 8.3 des Tragelements 8 verläuft unterhalb des hinteren Querträgers, 5 beabstandet von letzterem sowie vorzugsweise im Wesentlichen in vertikaler Flucht zu demselben (vgl. Fig. 1). Das gabelförmige oder im Wesentlichen U-förmige Tragelement 8 ist vorzugsweise rohrförmig und einstückig ausgebildet. Die mit dem vorderen Querträger 4 verbundenen Längsträger 8.1, 8.2 bzw. Abschnitte des Tragelements 8 weisen bogenförmige bzw. nach oben gebogene Endabschnitte 8.11, 8.21 auf.

Der vordere Querträger 4 ist mit einem ersten Verstärkungselement 9 und einem zweiten Verstärkungselement 10 versehen, die in Form von gebogenen Blechschalen ausgeführt sind. Die beiden schalenförmigen Verstärkungselemente 9, 10 dienen der Optimierung der Dauerschwingfestigkeit des Hilfsrahmens 1. Das erste Verstärkungselement 9 ist im Wesentlichen auf der Außenseite des Querträgers 4 bzw. Hilfsrahmens 1 angeordnet ist, während das zweite Verstärkungselement 10 im Wesentlichen auf der Innenseite des Querträgers 4 bzw. Hilfsrahmens 1 angeordnet ist.

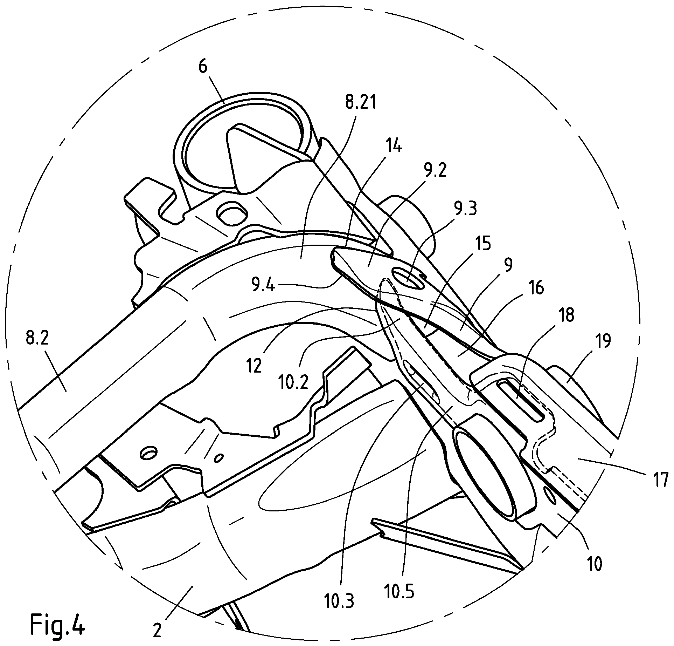

Die Verstärkungselemente (Blechschalen) 9, 10 sind so geformt, dass sie einander überlappende Enden 9.1, 10.1 aufweisen, die mit einem der Längsträger 8.1, 8.2, und zwar mit einem der gebogenen Abschnitte 8.11, 8.21 des gabelförmigen Tragelements 8 stoffschlüssig verbunden, vorzugsweise verschweißt sind. Das überlappende Ende 9.1 des ersten oder äußeren Verstärkungselements 9 überlappt das Ende 10.1 des zweiten oder inneren Verstärkungselements 10 an dessen Unterseite. Die überlappenden Enden 9.1, 10.1 sind dabei mit Abstand voneinander mit dem Längsträger 8.2 verbunden. Sie sind unterschiedlich gebogen, derart, dass das überlappende Ende 9.1 des ersten Verstärkungselements 9 einen größeren Biegeradius aufweist als der das überlappende Ende 10.1 des zweiten Verstärkungselements 10 (vgl. Fig. 3 und 4).

Das zweite Verstärkungselement 10 weist dabei an seinem das erste Verstärkungselement 9 überlappenden Ende 10.1 einen Flansch 10.2 auf, der in Richtung des ersten Verstärkungselements 9 gebogen ist, mit einem Biegeradius, der kleiner ist als der Biegeradius eines gebogenen Abschnitts 9.2 des überlappenden Endes 9.1 des ersten Verstärkungselements 9. Der Flansch 10.2 endet dabei in einem von den beiden Verstärkungselementen 9, 10 begrenzten Raum. Der größere Biegeradius des überlappenden Endes 9.1 des ersten Verstärkungselements 9 kann beispielsweise mindestens das 1,5-fache, vorzugsweise mindestens das 2-fache, besonders bevorzugt mindestens das 2,5-fache des kleineren Biegeradius des Flansches 10.2 des zweiten Verstärkungselements 10 betragen.

Die einander überlappenden Enden 9.1, 10.1 der beiden Verstärkungselemente 9, 10 sind entlang unterschiedlich langer Verbindungslinien 12, 14, vorzugsweise Schweißlinien, mit dem gebogenen Abschnitt 8.21 des gabelförmigen Tragelements 8 bzw. Längsträger 8.2 stoffschlüssig verbunden (vgl. Fig. 3 und 4). Die längere (14) der beiden Schweiß- oder Verbindungslinien beträgt beispielsweise mindestens das 1,3-fache, vorzugsweise mindestens das 1,5-fache, besonders bevorzugt mindestens das 1,8-fache der kürzeren Schweiß- oder Verbindungslinie 12.

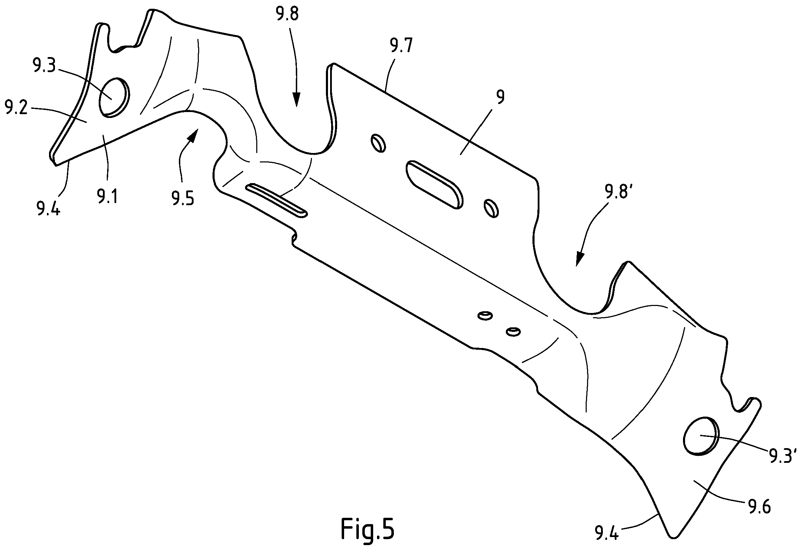

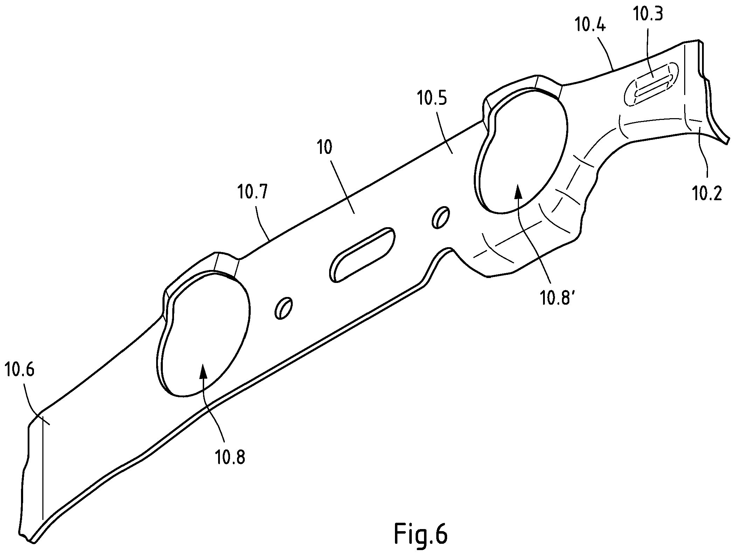

Das erste oder äußere Verstärkungselement 9 weist an seinem mit dem Längsträger 8.2 verbundenen Ende eine Ausnehmung 9.3 in Form eines Durchgangslochs auf (vgl. Fig. 4 und Fig. 5). Die Ausnehmung 9.3 reduziert mechanische Spannungen in dem überlappenden Ende 9.1 des Verstärkungselements 9. Das zweite oder innere Verstärkungselement 10 weist dagegen an seinem mit dem Längsträger 8.2 verbundenen Ende 10.1 eine Sicke 10.3 auf. Die Sicke 10.3 verläuft im Wesentlichen parallel zur Längsmittelachse des schalenförmigen Verstärkungselements 10 bzw. parallel zu der Blechkante 10.4, mit welcher das Verstärkungselement 10 an den Querträger 4 angeschlossen bzw. angeschweißt ist oder wird (vgl. Fig. 4 und Fig. 6).

In Fig. 3 ist zu erkennen, dass das zweite oder innere Verstärkungselement 10 eine Mittelebene oder Hauptebene 10.5 definiert. Die Mittelebene (Hauptebene) 10.5 kann auch als im Wesentlichen flacher oder plattenförmiger Abschnitt des schalenförmigen, zweiten Verstärkungselements 10 bezeichnet werden. Das Ende 9.1 des an der Außenseite des Querträgers 4 angeordneten ersten Verstärkungselements 9 weist eine Kante 9.4 auf, welche sich abschnittsweise über die Mittelebene 10.5 des zweiten Verstärkungselements 10 hinaus erstreckt.

Das aus Metallblech gefertigte Verstärkungselement 9, welches an der Außenseite des Querträgers 4 angeordnet ist, hat folglich einen größeren Kantenbiegeradius als das an der Innenseite des Querträgers 4 angeordnete zweite Verstärkungselement 10 und ist in Richtung des zweiten Verstärkungselements 10 gebogen. Das den größeren Kantenbiegeradius aufweisende Verstärkungselement 9 erstreckt sich so weit, dass seine Kante 9.4 hinter der Hauptebene 10.5 des zweiten Verstärkungselements 10 endet. Das zweite Verstärkungselement 10 weist einen Flansch 10.2 auf, der in Richtung des den größeren Kantenbiegeradius aufweisenden Verstärkungselements 9 gebogen ist, wobei der Flansch 10.2 in dem durch beide Verstärkungselemente 9, 10 begrenzten Raum 15 endet, und wobei die beiden Verstärkungselemente 9, 10 in diesem Raum 15 nicht miteinander verbunden sind.

Die Kante 9.4 des äußeren Verstärkungselements 9 hat vorzugsweise eine Kontur, die eine Einbuchtung 9.5 begrenzt, welche teilweise vor der Mittelebene (Hauptebene) 10.5 des zweiten Verstärkungselements 10 endet, so dass die beiden sich entlang des Querträgers 4 erstreckenden Verstärkungselemente 9, 10 zusammen eine unterseitige Öffnung 16 des von ihnen begrenzten Hohlraums 15 definieren (vgl. auch Fig. 4).

Die beiden schalenförmigen Verstärkungselemente 9, 10 sind an ihren anderen Enden 9.6 bzw. 10.6 mit dem anderen bogenförmigen Abschnitt 8.11 bzw. zweiten Längsträger 8.1 des gabelförmigen Tragelements 8 stoffschlüssig verbunden, vorzugsweise verschweißt. Auch an diesem Ende 9.6 überlappt das erste oder äußere Verstärkungselement 9 das Ende 10.6 des zweiten oder inneren Verstärkungselements 10. Diese Enden 9.6, 10.6 der beiden Verstärkungselemente 9, 10 sind jedoch anders ausgebildet als die zuvor beschriebenen, in Fig. 4 dargestellten Enden 9.1, 10.1. Das äußere Verstärkungselement 9 hat an dem Ende 9.6 zwar ebenfalls eine Ausnehmung (Durchgangsloch) 9.3' zur Reduzierung von mechanischen Spannungen, jedoch weist die überlappende Kante 9.4 an diesem Ende 9.6 keine Einbuchtung wie die Einbuchtung 9.5 des in den Figuren 4 und 5 gezeigten Kantenabschnitts 9.4 auf. Ferner weist das innere Verstärkungselement 10 an dem Ende 10.6 keine Sicke auf.

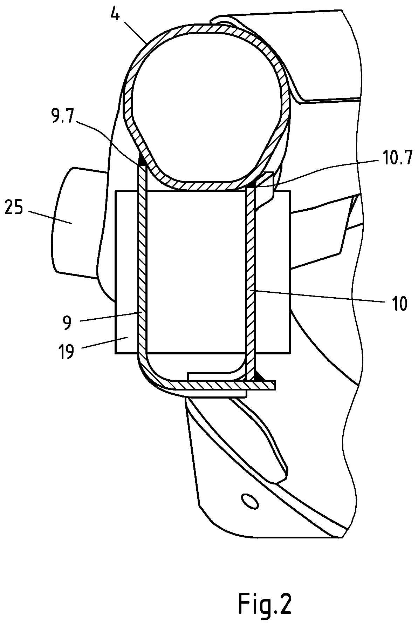

Die Verstärkungselemente 9, 10 sind entlang ihrer dem Querträger 4 zugewandten Längskanten 9.7, 10.7 abschnittsweise mit dem Querträger 4 stoffschlüssig verbunden, vorzugsweise verschweißt (vgl. Fig. 1 und Fig. 2). Zudem sind die beiden Verstärkungselemente 9, 10 entlang eines zwischen ihren Enden 9.1, 9.6 bzw. 10.1, 10.6 liegenden mittleren Abschnitts 17 miteinander stoffschlüssig verbunden, vorzugsweise verschweißt. Die stoffschlüssige Verbindung (Schweißverbindung) ist dabei entlang des zwischen den Enden 9.1, 9.6 bzw. 10.1, 10.6 der beiden Verstärkungselemente 9, 10 liegenden mittleren Abschnitts 17 insbesondere als Lochschweißung, vorzugsweise Langlochschweißung 18, ausgebildet (Fig. 4).

Des Weiteren umfasst der Hilfsrahmen 1 mehrere Aufnahmen zur Abstützung mindestens eines Antriebsaggregats (nicht gezeigt) und mindestens eine Aufnahme zur Lagerung eines Radführungslenkers (nicht gezeigt) je Fahrzeugseite.

In dem hier gezeigten, nicht beschränkenden Ausführungsbeispiel weist der Hilfsrahmen 1 vier Aufnahmen zur Abstützung mindestens eines Antriebsaggregats auf. Das Antriebsaggregat kann zum Beispiel ein Verbrennungsmotor einschließlich eines Getriebes sein. Bei dem Antriebsaggregat kann es sich jedoch auch um ein Differentialgetriebe (auch Ausgleichs- oder Verteilergetriebe genannt) handeln. Alternativ kann es sich bei dem mindestens einen Antriebsaggregat auch um einen Elektromotor handeln. Das Antriebsaggregat kann insbesondere auch mehrere Elektromotoren umfassen. So kann beispielsweise je Fahrzeugrad der angetriebenen Hinter- oder Vorderachse ein eigener Elektromotor vorgesehen sein. Die Abstützung des mindestens einen Antriebsaggregats erfolgt durch vordere Lageraufnahmen 19 und hintere Lageraufnahmen 20.

Die Lageraufnahmen 19, 20 sind beispielsweise als Buchsen ausgeführt. Die Längsmittelachsen der Buchsen erstrecken sich in Fahrzeuglängsrichtung x. Die hinteren Lageraufnahmen (Buchsen) 20 sind in Ausnehmungen bzw. Ausschnitten von Blechen 21, 22 eingesetzt und mit den Blechen 21, 22 stoffschlüssig verbunden, vorzugsweise verschweißt. Die Bleche 21, 22 sind ihrerseits mit dem hinteren Querträger 5 und dem mittleren Abschnitt 8.3 bzw. einem bogenförmigen Abschnitt 8.4, 8.5 des gabelförmigen Tragelements 8 verbunden, vorzugsweise verschweißt. Zwischen den Blechen 21, 22 ist eine Durchgangsöffnung 23 ausgespart, die mit der vertikalen Längsmittelebene des Hilfsrahmens 1 fluchtet. Die vorderen Lageraufnahmen (Buchsen) 19 sind in Ausnehmungen 10.8, 10.8' bzw. Ausschnitten 9.8, 9.8' der schalenförmigen Verstärkungselemente 9, 10 eingesetzt und mit den Verstärkungselementen 9, 10 stoffschlüssig verbunden, vorzugsweise verschweißt.

Der Hilfsrahmen 1 weist ferner mehrere Lenkeraufnahmen 24, 25, 26 auf, die jeweils doppelt ausgeführt sind und jeweils in Bezug auf die Längsmittelachse des betreffenden Kraftfahrzeuges spiegelbildlich angeordnet sind. Im Folgenden werden lediglich die Lenkeraufnahmen 24, 25, 26 auf einer der beiden Fahrzeuglängsseiten betrachtet. Eine erste obere Lenkeraufnahme 24 ist außenseitig am Längsträger 3 zwischen den Querträgern 4, 5 angeordnet. Die Lenkeraufnahme 24 ist hier beispielhaft aus zwei am Längsträger 3 angeschweißten Laschen 24.1, 24.2 zusammengesetzt, welche jeweils ein Durchgangsloch zur Aufnahme eines Lagerbolzens aufweisen. Die Schwenkachse eines an dieser Lenkeraufnahme 24 gelagerten Querlenkers (nicht gezeigt) verläuft im Wesentlichen horizontal in Fahrzeuglängsrichtung x.

Unterhalb der oberen Lenkeraufnahme 24 sind zwei untere Lenkeraufnahmen 25, 26 angeordnet, und zwar in Bezug auf die oberer Lenkeraufnahme 24 und die Vorwärtsfahrtrichtung V eine vordere untere Lenkeraufnahme 25 und eine hintere untere Lenkeraufnahme 26. Die hintere untere Lenkeraufnahme 26 ist ebenfalls beispielhaft aus zwei am Längsträger 3 angeschweißten Laschen 26.1, 26.2 zusammengesetzt, welche jeweils ein Durchgangsloch zur Aufnahme eines Lagerbolzens aufweisen. Die Laschen 26.1, 26.2 sind sowohl an dem oberen Längsträger 3 als auch an dem unteren Längsträgerabschnitt 8.1 bzw. bogenförmigen Abschnitt 8.4 des gabelförmigen Tragelements 8 befestigt (vgl. Fig. 3). Die vordere untere Lenkeraufnahme 25 ist dagegen beispielhaft durch eine Lagerbuchse gebildet, die in dem gegenüber dem Längsträger 8.1, 8.2 bzw. 2, 3 seitlich vorstehenden Ende 4.1, 4.2 des vorderen Querträgers 4 integriert ist. Die Schwenkachsen der vorderen unteren Lenkeraufnahmen 25 verlaufen in Vorwärtsfahrtrichtung V divergierend auseinander.

Zur Erzielung einer hohen Steifigkeit des Hilfsrahmens 1 ist dieser vorzugsweise mit zusätzlichen Verstärkungs- oder Verbindungsblechen versehen. So sind beispielsweise an den inneren Ecken, die jeweils durch den vorderen Querträger 4 und einen der daran angeschlossenen Längsträger 2, 3 definiert sind, Verbindungsbleche 28, 28' angeordnet, die mit dem Querträger 4 und einem der Längsträger 2 oder 3 fest verbunden, vorzugsweise verschweißt sind (Fig. 1). Ferner sind auch an den äußeren Ecken, die durch den hinteren Querträger 5 und einen der daran angeschlossenen Längsträger 2, 3 definiert sind, Verbindungsbleche 29, 29' angeordnet, die mit dem hinteren Querträger 5 und einem der Längsträger 2 oder 3 fest verbunden, vorzugsweise verschweißt sind. Des Weiteren sind beispielhaft an der Unterseite der letztgenannten Verbindungsbleche 29, 29' Konsolbleche 30, 30' angeschlossen, die jeweils mit der Innenseite des hinteren Abschnitts des Längsträgers 2, 3 verbunden sind, der einen Anbindungspunkt 7 zur Befestigung des Hilfsrahmens 1 an einer Fahrzeugkarosserie aufweist. Weiterhin ist das Konsolblech 30, 30' mit dem bogenförmigen Abschnitt 8.4, 8.5 des gabelförmigen Tragelements 8 und mit der hinteren Lasche 26.1 der Lenkeraufnahme 26 verbunden, vorzugsweise verschweißt. Ferner sind an der Oberseite des Hilfsrahmens 1 schalenförmige Verstärkungs- bzw. Verbindungsbleche 31, 31', 32, 32' angeordnet, die mit dem seitlich vorstehenden Abschnitt 4.1, 4.2 des den Karosserie-Anbindungspunkt 6 aufweisenden Querträgers 4 und der vorderen Lasche 24.2, 24.2' der oberen Lenkeraufnahme 24 bzw. zusätzlich mit dem an dem Querträger 4 angeschlossenen Ende des Längsträger 2, 3 verbunden, vorzugsweise verschweißt sind.

Die Ausführung des erfindungsgemäßen Hilfsrahmens 1 ist nicht auf das in der Zeichnung dargestellte Ausführungsbeispiel beschränkt. Vielmehr sind zahlreiche Varianten möglich, die auch bei von dem Ausführungsbeispiel abweichender Gestaltung von der in den beigefügten Ansprüchen offenbarten Erfindung Gebrauch machen.

## Patentansprüche

1. Hilfsrahmen für ein Kraftfahrzeug, mit beabstandet voneinander verlaufenden Längsträgern (8.1, 8.2), mindestens einem die Längsträger miteinander verbindenden Querträger (4) und Verstärkungselementen (9, 10), die mit den Längsträgern (8.1, 8.2) und dem Querträger (4) verbunden und aus Metallblech gefertigt sind, **dadurch gekennzeichnet, dass** die Verstärkungselemente (9, 10) aus einem ersten Verstärkungselement (9) und einem zweiten Verstärkungselement (10) zusammengesetzt sind, die als gebogene Schalen ausgeführt sind und einander überlappende Enden (9.1, 10.1) aufweisen, wobei die überlappenden Enden (9.1, 10.1) mit dem Querträger oder einem der Längsträger (8.2) stoffschlüssig verbunden, vorzugsweise verschweißt sind.

2. Hilfsrahmen nach Anspruch 1, **dadurch gekennzeichnet, dass** die überlappenden Enden (9.1, 10.1) beabstandet voneinander mit dem Querträger oder einem der Längsträger (8.2) stoffschlüssig verbunden sind.

3. Hilfsrahmen nach Anspruch 1 oder 2, **dadurch gekennzeichnet, dass** die überlappenden Enden (9.1, 10.1) unterschiedlich gebogen sind, derart, dass das überlappende Ende (9.1) des ersten Verstärkungselements (9) einen größeren Biegeradius aufweist als das überlappende Ende (10.1) des zweiten Verstärkungselements (10).

4. Hilfsrahmen nach einem der Ansprüche 1 bis 3, **dadurch gekennzeichnet, dass** das zweite Verstärkungselement (10) an seinem das erste Verstärkungselement (9) überlappenden Ende einen Flansch (10.2) aufweist, der in Richtung des ersten Verstärkungselements (9) gebogen ist, mit einem Biegeradius, der kleiner ist als der Biegeradius eines gebogenen Abschnitts (9.2) des überlappenden Endes (9.1) des ersten Verstärkungselements (9).

5. Hilfsrahmen nach Anspruch 4, **dadurch gekennzeichnet, dass** der Flansch (10.2) in einem von dem ersten Verstärkungselement (10) und dem zweiten Verstärkungselement (10) begrenzten Raum (15) endet.

6. Hilfsrahmen nach Anspruch 4 oder 5, **dadurch gekennzeichnet, dass** der größere Biegeradius mindestens das 1,5-fache, vorzugsweise mindestens das 2-fache, besonders bevorzugt mindestens das 2,5-fache des kleineren Biegeradius beträgt.

7. Hilfsrahmen nach einem der Ansprüche 1 bis 6, **dadurch gekennzeichnet, dass** das zweite Verstärkungselement (10) eine Mittelebene (10.5) definiert, wobei das überlappende Ende (9.1) des ersten Verstärkungselements (9) eine Kante (9.4) aufweist, die sich über die Mittelebene (10.5) des zweiten Verstärkungselements (10) hinaus erstreckt.

8. Hilfsrahmen nach einem der Ansprüche 1 bis 7, **dadurch gekennzeichnet, dass** das überlappende Ende (9.1) des ersten Verstärkungselements (9) das überlappende Ende (10.1) des zweiten Verstärkungselements (10) an der Unterseite des zweiten Verstärkungselements (10) überlappt.

9. Hilfsrahmen nach einem der Ansprüche 1 bis 8, **dadurch gekennzeichnet, dass** die überlappenden Enden (9.1, 10.1) entlang unterschiedlich langer Verbindungslinien (12, 14), vorzugsweise unterschiedlich langer Schweißlinien, mit dem Querträger oder einem der Längsträger (8.2) stoffschlüssig verbunden sind.

10. Hilfsrahmen nach Anspruch 9, **dadurch gekennzeichnet, dass** die längere (14) der Verbindungslinien mindestens das 1,3-fache, vorzugsweise mindestens das 1,5-fache, besonders bevorzugt mindestens das 1,8-fache der kürzeren Verbindungslinie (12) beträgt.

11. Hilfsrahmen nach einem der Ansprüche 1 bis 10, **dadurch gekennzeichnet, dass** sich das erste Verstärkungselement (9) und das zweite Verstärkungselement (10) entlang des Querträgers (4) oder eines der Längsträger erstrecken.

12. Hilfsrahmen nach einem der Ansprüche 1 bis 11, **dadurch gekennzeichnet, dass** das erste Verstärkungselement (9) und das zweite Verstärkungselement (10) entlang eines zwischen ihren Enden (9.1, 9.6; 10.1, 10.6) liegenden mittleren Abschnitts (17) der beiden Verstärkungselemente (9, 10) miteinander stoffschlüssig verbunden sind.

13. Hilfsrahmen nach Anspruch 12, **dadurch gekennzeichnet, dass** die stoffschlüssige Verbindung entlang des zwischen den Enden (9.1, 9.6; 10.1, 10.6) der beiden Verstärkungselemente (9, 10) liegenden mittleren Abschnitts (17) zumindest teilweise als Lochschweißung, vorzugsweise Langlochschweißung (18), ausgebildet ist.

14. Hilfsrahmen nach einem der Ansprüche 1 bis 13, **dadurch gekennzeichnet, dass** das erste Verstärkungselement (9) im Wesentlichen auf einer Außenseite des Hilfsrahmens (1) angeordnet ist, während das zweite Verstärkungselement (10) im Wesentlichen auf einer Innenseite des Hilfsrahmens (1) angeordnet ist.

15. Hilfsrahmen nach einem der Ansprüche 1 bis 14, **dadurch gekennzeichnet, dass** mindestens eines oder beide der überlappenden Enden (9.1, 10.1) der Verstärkungselemente (9, 10) mit mindestens einer Sicke (10.3) und/oder mindestens einer Ausnehmung (9.3) versehen ist.

## Claims

1. Subframe for a motor vehicle, comprising longitudinal beams (8.1, 8.2) extending at a distance from each other, at least one cross beam (4) connecting the longitudinal beams to one another, and reinforcing elements (9, 10) which are connected to the longitudinal beams (8.1, 8.2) and the cross beam (4) and are made from sheet metal, **characterized in that** the reinforcing elements (9, 10) are composed of a first reinforcing element (9) and a second reinforcing element (19) which are designed as bent shells and have mutually overlapping ends (9.1, 10.1), the overlapping ends (9.1, 10.1) being connected, preferably welded, to the cross beam or one of the longitudinal beams (8.2).

2. The subframe according to claim 1, **characterized in that** the overlapping ends (9.1, 10.1) are connected in spaced relation to one another and in a materially closed manner to the cross beam or one of the longitudinal beams (8.2).

3. The subframe according to claim 1 or 2, **characterized in that** the overlapping ends (9.1, 10.1) are differently bent such that the overlapping end (9.1) of the first reinforcing element (9) has a larger bending radius than the overlapping end (10.1) of the second reinforcing element (10).

4. The subframe according to any one of claims 1 to 3, **characterized in that** the second reinforcing element (10) comprises on its end overlapping the first reinforcing element (9) a flange (10.2) which is bent in the direction of the first reinforcing element (9), with a bending radius which is smaller than the bending radius of a bent portion (9.2) of the overlapping end (9.1) of the first reinforcing element (9).

5. The subframe according to claim 4, **characterized in that** the flange (10.2) ends in a space (15) delimited by the first reinforcing element (9) and the second reinforcing element (10).

6. The subframe according to claim 4 or 5, **characterized in that** the larger bending radius is at least 1.5 times, preferably at least 2 times, more preferably at least 2.5 times the smaller bending radius.

7. The subframe according to any one of claims 1 to 6, **characterized in that** the second reinforcing element (10) defines a median plane (10.5), the overlapping end (9.1) of the first reinforcing element (9) having an edge (9.4) which extends beyond the median plane (10.5) of the second reinforcing element (10).

8. The subframe according to any one of claims 1 to 7, **characterized in that** the overlapping end (9.1) of the first reinforcing element (9) overlaps the overlapping end (10.1) of the second reinforcing element (10) on the lower side of the second reinforcing element (10).

9. The subframe according to any one of claims 1 to 8, **characterized in that** the overlapping ends (9.1, 10.1) are integrally connected to the cross beam or one of the longitudinal beams (8.2) along different lengths of connecting lines (12, 14), preferably different lengths of welding lines.

10. The subframe according to claim 9, **characterized in that** the longer (14) of the connecting lines is at least 1.3 times, preferably at least 1.5 times, more preferably at least 1.8 times the shorter connecting line (12).

11. The subframe according to any one of claims 1 to 10, **characterized in that** the first reinforcing element (9) and the second reinforcing element (10) extend along the cross beam (4) or one of the longitudinal beams.

12. The subframe according to any one of claims 1 to 11, **characterized in that** the first reinforcing element (9) and the second reinforcing element (10) are integrally connected to one another along an intermediate portion (17) of the two reinforcing elements (9, 10), said intermediate portion (17) lying between the ends (9.1, 9.6; 10.1, 10.6) the two reinforcing elements (9, 10).

13. The subframe according to claim 12, **characterized in that** the integral connection along the intermediate portion (17) lying between the ends (9.1, 9.6; 10.1, 10.6) the two reinforcing elements (9, 10) is formed at least partially as a plug weld, preferably a slot weld.

14. The subframe according to any one of claims 1 to 13, **characterized in that** the first reinforcing element (9) is arranged essentially on an outer side of the subframe (1) while the second reinforcing element is arranged essentially on an inner side of the subframe (1).

15. The subframe according to any one of claims 1 to 14, **characterized in that** at least one or both of the overlapping ends (9.1, 10.1) of the reinforcing elements (9, 10) is/are provided with at least one bead (10.3) and/or at least one recess (9.3).

## Revendications

1. Châssis auxiliaire pour un véhicule automobile, comprenant des longerons (8.1, 8.2) s'étendant en étant espacés l'un de l'autre, comprenant au moins une traverse (4) assemblant l'un à l'autre les longerons et comprenant des éléments de renfort (9, 10) qui sont assemblés avec les longerons (8.1, 8.2) et avec la traverse (4), lesdits les éléments de renfort étant fabriqués à partir d'une tôle métallique, **caractérisé en ce que** les éléments de renfort (9, 10) sont composés d'un premier élément de renfort (9) et d'un second élément de renfort (10), qui sont réalisés comme des coques courbées et présentent des extrémités (9.1, 10.1) se chevauchant l'une l'autre, où les extrémités se chevauchant (9.1, 10.1) sont assemblées, de préférence soudées, par continuité de matière, avec la traverse ou avec l'un des longerons (8.2).

2. Châssis auxiliaire selon la revendication 1, **caractérisé en ce que** les extrémités se chevauchant (9.1, 10.1), espacées l'une de l'autre, sont assemblées par continuité de matière, avec la traverse ou avec l'un des longerons (8.2).

3. Châssis auxiliaire selon la revendication 1 ou 2, **caractérisé en ce que** les extrémités se chevauchant (9.1, 10.1) sont courbées de différentes façons, de telle manière que l'extrémité chevauchante (9.1) du premier élément de renfort (9) présente un rayon de courbure plus grand que celui de l'extrémité chevauchante (10.1) du second élément de renfort (10).

4. Châssis auxiliaire selon l'une quelconque des revendications 1 à 3, **caractérisé en ce que** le second élément de renfort (10) présente, au niveau de son extrémité chevauchant le premier élément de renfort (9), une bride (10.2) qui est courbée en direction du premier élément de renfort (9), ladite bride ayant un rayon de courbure qui est plus petit que le rayon de courbure d'une partie courbée (9.2) de l'extrémité chevauchante (9.1) du premier élément de renfort (9).

5. Châssis auxiliaire selon la revendication 4, **caractérisé en ce que** la bride (10.2) se termine dans un espace (15) délimité par le premier élément de renfort (9) et par le second élément de renfort (10).

6. Châssis auxiliaire selon la revendication 4 ou 5, **caractérisé en ce que** le plus grand rayon de courbure est égal à au moins 1,5 fois, de préférence égal à au moins 2 fois, de façon particulièrement préférable égal à au moins 2,5 fois le plus petit rayon de courbure.

7. Châssis auxiliaire selon l'une quelconque des revendications 1 à 6, **caractérisé en ce que** le second élément de renfort (10) définit un plan médian (10.5), où l'extrémité chevauchante (9.1) du premier élément de renfort (9) présente un bord (9.4) qui s'étend au-delà du plan médian (10.5) du second élément de renfort (10).

8. Châssis auxiliaire selon l'une quelconque des revendications 1 à 7, **caractérisé en ce que** l'extrémité chevauchante (9.1) du premier élément de renfort (9) chevauche, au niveau du dessous du second élément de renfort (10), l'extrémité chevauchante (10.1) du second élément de renfort (10).

9. Châssis auxiliaire selon l'une quelconque des revendications 1 à 8, **caractérisé en ce que** les extrémités se chevauchant (9.1, 10.1) sont assemblées, par continuité de matière, avec la traverse ou avec l'un des longerons (8.2), le long de lignes d'assemblage (12, 14) de différentes longueurs, de préférence le long de lignes de soudure de différentes longueurs.

10. Châssis auxiliaire selon la revendication 9, **caractérisé en ce que** la plus longue (14) des lignes d'assemblage est égale à au moins 1,3 fois, de préférence égale à au moins 1,5 fois, de façon particulièrement préférable égale à au moins 1,8 fois la ligne d'assemblage (12) la plus courte.

11. Châssis auxiliaire selon l'une quelconque des revendications 1 à 10, **caractérisé en ce que** le premier élément de renfort (9) et le second élément de renfort (10) s'étendent le long de la traverse (4) ou de l'un des longerons.

12. Châssis auxiliaire selon l'une quelconque des revendications 1 à 11, **caractérisé en ce que** le premier élément de renfort (9) et le second élément de renfort (10) sont assemblés l'un à l'autre, par continuité de matière, le long d'une partie (17) des deux éléments de renfort (9, 10), ladite partie étant placée au milieu et située entre les extrémités (9.1, 9.6 ; 10.1, 10.6) desdits éléments de renfort.

13. Châssis auxiliaire selon la revendication 12, **caractérisé en ce que** l'assemblage par continuité de matière est formé au moins en partie comme une soudure en trou, de préférence comme une soudure en trou oblong (18), le long de la partie (17) placée au milieu et située entre les extrémités (9.1, 9.6 ; 10.1, 10.6) des deux éléments de renfort (9, 10).

14. Châssis auxiliaire selon l'une quelconque des revendications 1 à 13, **caractérisé en ce que** le premier élément de renfort (9) est disposé pratiquement sur un côté extérieur du châssis auxiliaire (1), tandis que le second élément de renfort (10) est disposé pratiquement sur un côté intérieur du châssis auxiliaire (1).

15. Châssis auxiliaire selon l'une quelconque des revendications 1 à 14, **caractérisé en ce qu'**au moins l'une ou les deux extrémités se chevauchant (9.1, 10.1) des éléments de renfort (9, 10) est ou sont dotée(s) au moins d'une moulure (10.3) et/ou au moins d'un évidement (9.3).
